# EUROPÄISCHE PATENTSCHRIFT

(11) **EP 0 710 337 B1**
(45) Veröffentlichungstag und Bekanntmachung des Hinweises auf die Patenterteilung: **07.10.1998**
(21) Anmeldenummer: 94924284.6
(22) Anmeldetag: 25.07.1994
(51) Int. Cl.: F16H 61/02

(54) **STEUERSYSTEM ZUM SCHALTEN EINES AUTOMATISCHEN GETRIEBES**
CONTROL SYSTEM FOR AN AUTOMATIC SHIFT GEAR BOX
SYSTEME DE COMMANDE D'UNE BOITE DE VITESSES AUTOMATIQUE

(30) Priorität: 28.07.1993 DE 4325296
(43) Veröffentlichungstag der Anmeldung: 08.05.1996
(73) Patentinhaber: ZF FRIEDRICHSHAFEN Aktiengesellschaft, 88038 Friedrichshafen (DE)
(72) Erfinder: DANZ, Wolfgang, D-88046 Friedrichshafen (DE); GILLICH, Udo, D-88074 Meckenbeuren (DE); ESCHRICH, Gerhard, D-88069 Tettnang (DE); RUNGE, Wolfgang, D-88214 Ravensburg (DE)
(86) Internationale Anmeldenummer: EP9402448
(87) Internationale Veröffentlichungsnummer: WO9504234

(56) Entgegenhaltungen:
- EP-A- 0 304 089
- EP-A- 0 347 261
- EP-A- 0 454 504
- EP-A- 0 532 363
- EP-A- 0 532 365
- EP-A- 0 576 703
- WO-A-93/23689
- DE-A- 4 334 146
- DE-A- 4 337 164
- DE-A- 4 337 957

## Beschreibung

Die Erfindung bezieht sich auf ein Steuersystem zum Verändern der Übersetzung eines automatischen Getriebes. Insbesondere handelt es sich um eine Steuerung unter Verwendung von Fuzzy-Logik-Methoden zur Schaltpunktbestimmung.
Es sind Mittel (Sensoren, Schalter usw.) zum Erfassen von Eingangsvariablen, die von einem Fahrer-Fahrzeugsystem abgeleitet sind, vorhanden. Für die Eingangsvariablen werden Zugehörigkeitsfunktionen, d. h. Fuzzy-Sets, erzeugt; hierzu sind ebenfalls Mittel vorhanden. Zum Verändern von Getriebeübersetzungen sind ferner Mittel, wie beispielsweise hydraulisch betätigbare Schaltkupplungen und Ventile, vorgesehen. Die Mittel zum Erfassen der Eingangsvariablen und die Mittel zum Erzeugen der Zugehörigkeitsfunktionen und die Mittel zum Verändern der Getriebeübersetzungen wirken in einer bestimmten Weise zusammen: Nach Fuzzy-Produktionsregeln werden Ausgangsvariable ermittelt, mit denen eine Getriebeübersetzung bestimmt wird.

Automatikgetriebe dienen grundsätzlich der Anpassung des von einem Antriebsmotor eines Fahrzeugs gelieferten Drehmoments an dessen Zugkraftbedarf. Derartige automatische Getriebe haben eine elektronisch-hydraulische Steuerung.
Eine zentrale Bedeutung für das gesamte Fahrverhalten kommt der elektronischen Steuerung zu, weil die Schaltvorgänge mit Hilfe von Last-Drehzahlkennfeldern erkannt und ausgeführt werden.

Ob und in welchen Gang geschaltet wird, hängt von der Lasteinstellung, d. h. dem aktuellen Zustand der Drosselklappe und der Abtriebsdrehzahl, des Getriebes ab. Die einzelnen Gangstufen werden in Abhängigkeit von Schaltkennlinien, die aus diesen beiden Parametern gebildet werden, geschaltet. Die Schaltkennlinien eines automatischen Getriebes bestehen aus Hoch- und Rückschaltgeraden für die einzelnen Gänge, die in einem Schaltdiagramm so verlaufen, daß zwischen den einzelnen Gangbereichen eine Hysterese entsteht. Trotz dieser Hysterese bestimmen letztlich scharfe, invariante Entscheidungsschwellen, ob und in welchen Gang geschaltet wird. Die Verwendung solcher scharfer Entscheidungsschwellen bedeutet zum einen, daß nur diskrete, invariante Zustände zur Auslösung eines Schaltvorgangs führen können und zum anderen, daß hier eine Verfälschung des logischen Aussagegehaltes der Entscheidung systematisch vorhanden ist. Das Schaltverhalten eines automatischen Getriebes kann geändert werden, indem adaptive Schaltkennlinien, d. h. Schaltkennlinien, die sich nach der Fahrleistung, dem Verbrauch oder speziellen Fahrzuständen richten, aktiviert werden.

Trotz einer Vielzahl bereits genutzter Möglichkeiten zur automatisierten Schaltpunktbestimmung ist das Ziel, die automatische Gangwahl dem Verhalten eines menschlichen Fahrers, insbesondere auch eines bestimmten Fahrertyps, anzunähern, nur unvollkommen erreicht.

Eine Möglichkeit, die menschliche Entscheidungsfindung besser zu repräsentieren, als dies über Schwellwerte oder Kennfelder möglich ist, ist der Einsatz der Fuzzy-Logik-Methode. Ein Fuzzy-Inferenz-System ermöglicht eine Entscheidung, bei der eine Vielzahl von Parametern berücksichtigt wird und Merkmale der menschlichen Entscheidungsfindung einfließen. Ein großer Vorteil dieser Methode besteht darin, daß sie eine direkte Verarbeitung verbal formulierter Problembeschreibungen erlaubt. Im Gegensatz zu herkömmlichen Steuerungsstrategien können Beurteilungskriterien herangezogen werden, die sich nicht in mathematische Beschreibungsformen fassen lassen, die aber bei der Entscheidungsfindung eine wesentliche Rolle spielen.

Ein Beispiel für ein Steuersystem zum Schalten eines automatischen Getriebes unter Verwendung von Fuzzy-Logik-Methoden ist der US-A-4,841,815 zu entnehmen. Als Eingangsvariable werden hierbei die Fahrzeuggeschwindigkeit bzw. deren Änderung, die Motorbelastung bzw. deren Änderung und der Fahrwiderstand in der Weise verarbeitet, daß für jeden zu schaltenden Gang Fuzzy-Beziehungen aufgestellt werden.
Diesem Steuersystem liegt eine komplexe Matrix zugrunde, die aus parallel und in Reihe miteinander verknüpften Fuzzy-Beziehungen besteht. Im Vergleich zu einer Getriebesteuerung, bei der die Gangstufe lediglich durch die Fahrzeuggeschwindigkeit und die Drosselklappenöffnung bestimmt wird, bringt die so bekannte Fuzzy-Steuerung insofern eine Verbesserung mit sich, da die eingangs erwähnten scharfen Entscheidungsschwellen nicht vorliegen.

Die bekannte Steuerung ist in zweierlei Hinsicht jedoch mit Nachteilen behaftet. Die gesamte Schaltentscheidung basiert auf lediglich drei Regeln, deren Prämissen-Glieder über ein logisches ODER verknüpft sind (Hoch-, Rückschalten und Gang halten). Das die Fuzzy-Logik-Methoden prägende Merkmal, positive und negative Regelentscheidungen zur Gesamtaussage miteinander zu verknüpfen, spielt bei dieser Lösung nur eine untergeordnete Rolle. Ferner werden keine Fuzzy-Regeln des Typs "Wenn ..., dann ...," verwendet, um das Expertenwissen eines menschlichen Fahrers zu repräsentieren. Schließlich werden funktional komplizierte Fuzzy-Sets eingesetzt. Hier werden die Sets nicht durch Geraden gebildet, sondern durch von Geraden abweichende Funktionen, die mathematisch aufwendig zu beschreiben und rechnerisch aufwendig zu verarbeiten sind. Für den hier vorliegenden Fall einer relativ geringen Anzahl von Eingangsvariablen kann von akzeptablen Rechenzeiten ausgegangen werden. Bei komplexeren Systemen ist die vorgeschlagene Darstellung der Fuzzy-Sets und deren Verarbeitung nicht gut geeignet.

Ein Steuersystem zum Schalten eines automatischen Getriebes nach der Fuzzy-Logik-Methode und unter Verwendung von Fuzzy-Produktionsregeln gemäß dem Oberbegriff des Anspruches 1 bzw. 15 ist der EP-A-0 347 261 und EP-A-0 347 263 zu entnehmen. Die vorgeschlagenen Lösungen befassen sich mit der Behandlung spezieller Fahrsituationen, um das Fahrverhalten zu optimieren. Insbesondere geht es darum, unerwünschte Pendelschaltungen zu verhindern.

Diese bekannten Lösungen verwenden eine sehr große Anzahl von Fuzzy-Produktionsregeln. Dies führt teilweise zu sehr ähnlichen Aussagen und Beschränkungen auf scharfe Schwellwertentscheidungen. Eine weitere Folge der sehr großen Anzahl von Fuzzy-Produktionsregeln ist ein nicht optimiertes Regelwerk, das nur relativ aufwendig zu implementieren ist und zu vergleichsweise langen Rechenzeiten führt.

Die EP-A-0 375 155 befaßt sich mit der Schaltung eines automatischen Getriebes unter Verwendung von Fuzzy-Logik-Methoden, bei denen die Gangschaltung unter Berücksichtigung eines Zugkraftüberschusses erfolgt. Die EP-A-0 377 953 befaßt sich ebenfalls mit Vorschlägen zur Gangschaltung unter Berücksichtigung des Zugkraftüberschusses; insbesondere sollen unerwünschte Pendelschaltungen bei Bergfahrten und/oder zusätzlichen Anhängelasten berücksichtigt werden.

Zu den Lösungen, die sich mit der Betrachtung spezieller Fahrsituationen unter Verwendung von Fuzzy-Logik befassen, zählt ferner die DE-A-41 07 879.

Ein Steuersystem zum Schalten von Automatikgetrieben unter Berücksichtigung des normalen Fahrbetriebes und auch spezieller Fahrsituationen unter Anwendung von Fuzzy-Logik ist ferner noch der EP-B-0 454 504 zu entnehmen. Auch diesem System liegt eine vergleichsweise große Anzahl von Fuzzy-Regeln zugrunde, die untereinander gleichberechtigt sind. Eine Ausnahme hiervon machen Vorrangregeln (metarules), die ein Überdrehen des Motors verhindern. Auch bei dieser Lösung liegt ein nichtoptimiertes Regelwerk mit einer großen Anzahl von Regeln vor.

Der vorliegenden Erfindung liegt die Aufgabe zugrunde, ein Steuersystem zum Schalten von Automatik-getrieben unter Verwendung von Fuzzy-Logik-Methoden zu schaffen, das in der Lage ist, auf einen bestimmten Leistungswunsch des Fahrers zu reagieren. Unter der Bezeichnung "Leistungswunsch" soll hierbei keine physikalische Größe, sondern die Fähigkeit des Steuersystems verstanden werden, Verzögerungs- bzw. Beschleunigungswünsche des Fahrers unter Berücksichtigung eines aktuellen Fahrzustandes bzw. einer aktuellen Fahrsituation zu erkennen.

Die der Erfindung zugrunde liegende Aufgabe wird dadurch gelöst, daß zumindest die Eingangsvariablen der Drosselklappenstellung bzw. Fahrpedalstellung und deren Verstelldynamik nach Größe und Richtung als Funktion der Zeit miteinander nach Fuzzy-Produktionsregeln verknüpft werden. Die aus dieser Verknüpfung resultierende Größe repräsentiert einen Leistungswunsch des Fahrers. Sie bildet eine Eingangsvariable für einen Grund- und Zusatz-Regelsatz von Fuzzy-Produktionsregeln. Unter der Bezeichnung Leistungswunsch ist hierbei eine funktional zusammengesetzte Größe zu verstehen, die Aufschluß darüber gibt, in welchem Maße der Fahrer mit einem aktuellen Fahrzustand zufrieden ist. Bei einer einfacheren Ausführungsform genügt es zunächst, den Leistungswunsch in Verbindung mit den Parametern Motordrehzahl, Drosselklappenstellung, Gradient und der aktuellen Gangstufe in Fuzzy-Produktionsregeln zu verarbeiten. Diese stellen das Expertenwissen eines Fahrers eines Fahrzeuges dar, das mit einem manuell zu schaltenden Getriebe ausgestattet ist. Durch die Anwendung von Fuzzy-Logik-Methoden werden die Nachteile des Standes der Technik bei Automatik-Getrieben vermieden. Diese sind in erster Linie darauf zurückzuführen, daß die Schaltdiagramme scharfe Entscheidungsschwellen enthalten und lediglich auf der Basis der Drosselklappenöffnung und der Fahrzeuggeschwindigkeit beruhen.

Es ist zweckmäßig, wenn die Fuzzy-(Grund-)-Produktionsregeln durch einen Zusatz-Regelsatz ergänzt werden. Durch diesen Zusatz-Regelsatz werden situationsbedingte Fahrzustände berücksichtigt, wobei dem Leistungswunsch des Fahrers Rechnung getragen wird. Hierbei ist der Leistungswunsch eine funktional zusammengesetzte Größe, also keine meßbare, physikalische Größe.

Vorzugsweise wird die im Grund- und Zusatz-Regelsatz verwendete Größe des Leistungswunsches in einem eigenständigen Fuzzy-Modul als Ausgangsvariable generiert. Hierbei hat es sich als sehr zweckmäßg erwiesen, wenn der Zusammenhang zwischen der Fahrpedalstellung (Drosselklappenstellung) und deren Gradienten aus der Abfrage eines repräsentativen Fahrerquerschnittes ermittelt wird. Der Zusammenhang zwischen diesen Größen und dem daraus abgeleiteten Leistungswunsch unterliegt naturgemäß einer subjektiven Streuung. Durch eine Abfrage eines repräsentativen Fahrerquerschnittes wird eine neutrale Beurteilungsgrundlage geschaffen, die unabhängig davon ist, ob ein individueller Fahrer sportlich oder ökonomisch fährt.

Bei einer erweiterten Ausbaustufe der erfindungsgemäßen Lösung wird neben dem Leistungswunsch, der einem Beschleunigungswunsch entspricht, der Leistungswunsch, der einem Verzögerungswunsch entspricht, berücksichtigt. Es ist zweckmäßig, diesen Verzögerungswunsch über das Fahrpedal (Drosselklappe) und/oder über die Bremse zu erfassen. Hierbei hat es sich als nützlich erwiesen, den über das Fahrpedal bzw. über die Bremse angezeigten Verzögerungswunsch quantitativ unterschiedlich zu wichten.

Um die Fahrbarkeit (Driveability) positiv zu beeinflussen, ist es ferner sehr vorteilhaft, die Änderungsrichtung des Leistungswunsches unterschiedlich zu bewerten. Bei positiven Änderungen (Gasgeben) erwartet der Fahrer eine unmittelbare Reaktion des Fahrzeugs. Daher ist eine unverzögerte Übermittlung an das weiterverarbeitende Steuersystem vorteilhaft. Demgegenüber wird bei negativen Änderungen des Leistungswunsches (Gaswegnehmen) eine verzögerte Übermittlung als angenehm empfunden. Durch die Verzögerung wird zudem eine vom Fahrer über das Fahrpedal eingespeiste Unruhe gedämpft.

Es ist vorteilhaft, die angesprochene Verzögerung über eine funktionale Filterstruktur zu verwirklichen. In diesem Zusammenhang hat es sich als sehr vorteilhaft erwiesen, wenn die Verzögerungszeitkonstante variabel ist. Der Fahrer kann bei variablen Zeitkonstanten im unteren Lastbereich empfindlicher auf das Fahrzeug einwirken als dies im oberen Lastbereich erwünscht ist.

Um von einer Steuerung zu einem geschlossenen Regelkreis zu gelangen, wird bei einer weiteren erfindungsgemäßen Lösung der gestellten Aufgabe vorgeschlagen, durch die Funktionsblöcke zur Erkennung eines Beschleunigungs- bzw. Verzögerungswunsches (Leistungswunsch) und zur Identifikation des Fahrers nach Fuzzy-Produktionsregeln eine physikalische Größe zu erzeugen. Diese physikalische Größe ist der Zugkraftüberschuß, der als Sollwert in den Regelkreis eingespeist wird. Der aktuell vorliegende Zugkraftüberschuß, berechnet aus F = m x a, wird als Rückwert mit dem Sollwert verglichen.

Vorzugsweise wird bei diesem geschlossenen Regelkreis ein Regler eingesetzt, der nach Fuzzy-Produktionsregeln arbeitet. Er liefert, abhängig von der aktuellen Fahrsituation, einen Gang bzw. eine einzustellende Übersetzungsstufe als Stellgröße für das automatische Getriebe.

Die vorstehend erläuterten, erfindungsgemäßen Lösungen sind nicht nur auf automatische Stufengetriebe anwendbar. Die Erfindung ist vielmehr auch bei automatisch stufenlos verstellbaren Getrieben (CVT) zu verwirklichen. Es ist ferner möglich, die vorgeschlagenen Lösungen im Zusammenhang mit einer Vortriebsregelung (ASR) und einem ABS einzusetzen.

Weitere, für die Erfindung wesentliche Merkmale sowie die daraus resultierenden Vorteile sind der nachfolgenden Beschreibung anhand der Zeichnungen zu entnehmen.

Es zeigen:
- Fig. 1: eine schematische Übersicht des Steuersystems;
- Fig. 2: eine Matrix-Darstellung des Regelwerkes zur Ermittlung des Leistungswunsches;
- Fig. 3 und 4: einzelne Fuzzy-(Sub-)Sets, die zum Regelwerk des Leistungswunsches gehören;
- Fig. 5: eine Matrix-Darstellung des Regelwerkes zur Ermittlung des Verzögerungswunsches in Abhängigkeit der Stellung bzw. Stellungsänderung eines Fahrpedals;
- Fig. 6: eine weitere Regelwerk-Matrix, die die Bremsaktivitäten zur Repräsentation eines Verzögerungswunsches einbezieht;
- Fig. 7 bis 9: einzelne Fuzzy-(Sub-)Sets zur Darstellung eines Leistungswunsches im Falle einer Verzögerung;
- Fig. 10: eine schematische Darstellung eines Filters, das eine dem Leistungswunsch entsprechende Ausgangsvariable generiert;
- Fig. 11: die schematische Abbildung eines geschlossenen Regelkreises.

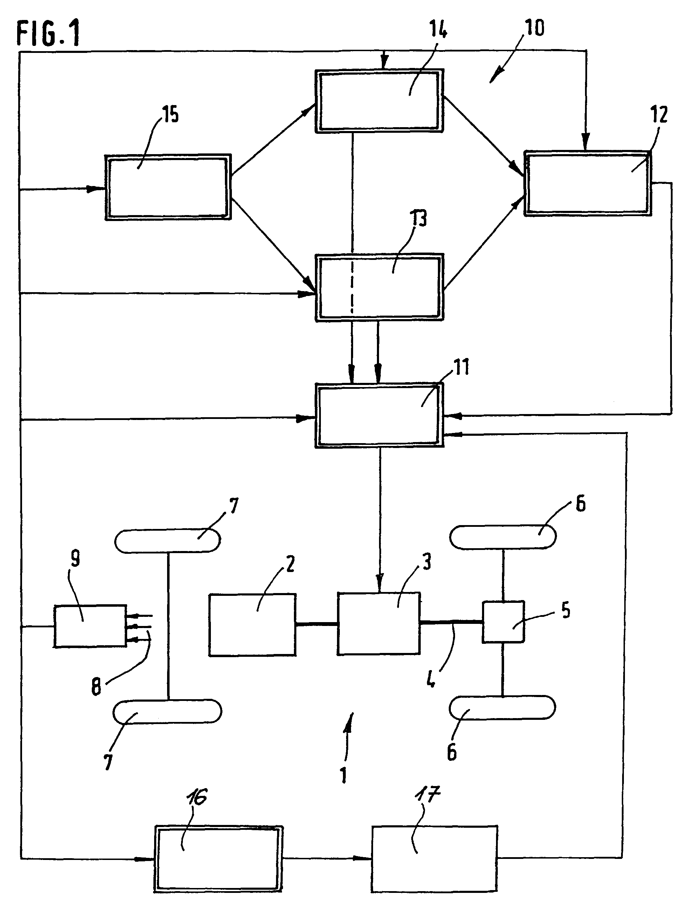

In Fig. 1 ist schematisch ein Fahrzeug 1 mit seinen Hauptkomponenten: Motor 2 und automatischem Getriebe 3, einem Antriebswellenstrang 4, einem Ausgleichsgetriebe 5, den angetriebenen Rädern 6 (Front- und/oder Heckgetrieben) und den lenkbaren Rädern 7 gezeichnet.

Eine Reihe von Fahrzeug-Parametern bilden Eingangsvariable 8, die laufend durch geeignete Mittel 9 (mechanische oder elektrische Schalter, Sensoren beliebiger Bauart) erfaßt werden. Bei diesen Eingangsvariablen kann es sich beispielsweise um folgende Fahrzeug-Parameter handeln:
Drosselklappenstellung, Gradient einer Veränderung der Drosselklappenstellung, aktuelle Geschwindigkeit (Raddrehzahlen), Längsbeschleunigung, Verzögerung, Positionsstellung eines Getriebe-Wählhebels, berechneter Zugkraftüberschuß nach einem möglichen Hochschalten, Größe der Querbeschleunigung, Größe des Lenkwinkels, Lenkwinkelgeschwindigkeit, Bremsschalter Ein/Aus.

Ein Steuersystem 10 zum Schalten des automatischen Getriebes 3 ist aus mehreren Funktionsblöcken zusammengesetzt:
- einem Funktionsblock 11 als Basismodul,
- einem Funktionsblock 12 als Adaptionsmodul,
- einem Funktionsblock 13 als Modul zur Fahrer-Identifikation,
- einem Funktionsblock 14 als Modul zur Fahrzustands-Erkennung,
- einem Funktionsblock 15, der verschiedene Filteraufgaben zu erfüllen hat,
- einem Funktionsblock 16 als Modul zur Erkennung eines Beschleunigungs- bzw. Verzögerungswunsches (hier mit Leistungswunsch definiert) und
- einem Funktionsblock 17, der ebenfalls Filteraufgaben erfüllt.

Zwischen den Funktionsblöcken 11 bis 17 des Steuersystems 10 besteht eine Verknüpfung, die durch die Richtungspfeile kenntlich gemacht ist.

### Funktionsblock 11:

Im Funktionsblock 11 als Basismodul werden nach Fuzzy-Logik-Methoden Schaltpunkte ermittelt, die eine bestimmte, vorzugsweise ökonomische, Fahrweise wiedergeben. Die nachstehend aufgeführten Regeln 1 bis 6 bilden einen Grundregelsatz von Fuzzy-Produktionsregeln zur Schaltpunktbestimmung, der eine verbrauchsorientierte Fahrweise definiert. Die Regeln sind vorzugsweise in Prioritätsklassen unterteilt, wodurch besonderen Anforderungen (z. B. Vorrangregeln aus Gründen der Sicherheit) Rechnung getragen wird.
Regel 1:
   Benutzte Parameter ... Motordrehzahl (rpm), aktuelle Gangstufe
   Regel-Konklusion: "... einen Gang hochschalten."
   Regelaussage: "Wenn Motordrehzahl hoch und niedrige Gangstufe, dann einen Gang hochschalten."
Regel 2:
   Benutzte Parameter ... Motordrehzahl, aktuelle Gangstufe
   Regel-Konklusion: "... einen Gang zurückschalten."
   Regelaussage: "Wenn Motordrehzahl niedrig und hohe Gangstufe, dann einen Gang zurückschalten."
Regel 3:
   Benutzte Parameter ... Motordrehzahl, aktuelle Gangstufe
   Regel-Konklusion: "... Gang beibehalten."
   Regelaussage: "Wenn Motordrehzahl mittel, dann Gang beibehalten."
Regel 4:
   Benutzte Parameter ... Motordrehzahl, Drosselklappenstellung (Theta), Drosselklappen-Gradient, (Delta-Theta)
   Regel-Konklusion: "... einen Gang zurückschalten."
   Regelaussage: "Wenn Leistungswunsch groß und Gang groß und Motordrehzahl nicht extrem groß und Drosselklappen-Gradient nicht negativ, dann einen Gang zurückschalten."
Regel 5:
   Benutzte Parameter ... Drosselklappenstellung, Drosselklappen-Gradient, Motordrehzahl
   Regel-Konklusion: "... einen Gang hochschalten."
   Regelaussage: "Wenn Leistungswunsch klein und Motordrehzahl nicht niedrig, dann einen Gang hochschalten."
Regel 6:
   Benutzte Parameter ... Drosselklappenstellung, Drosselklappen-Gradient, Motordrehzahl, aktuelle Gangstufe
   Regel-Konklusion: "... einen Gang zurückschalten."
   Regelaussage: "Wenn Leistungswunsch sehr groß und Motordrehzahl nicht zu hoch und Gang hoch und Drosselklappen-Gradient nicht negativ, dann einen Gang zurückschalten".

Die vorstehend formulierten Regeln 1 bis 6 bilden den Grundregelsatz von Fuzzy-Produktionsregeln zur Schaltpunktbestimmung. Anstelle der Parameter Drosselklappenstellung und Gradient der Drosselklappenstellung können, je nach Beschaffenheit der Leistungsregeleinrichtung des Motors, gleichwertige Parameter treten. Soweit der Parameter Motordrehzahl im Grundregelsatz verwendet wird, kann ersatzweise von der Turbinendrehzahl (Getriebe mit Wandler), der Getriebeeingangsdrehzahl oder einem gleichwertigen Parameter Gebrauch gemacht werden. Diese sind z. B. die Stellung des Fahrpedals und die Änderung der Fahrpedalstellung (E-Gas oder dergleichen). In diesem Grundregelsatz findet der Leistungswunsch des Fahrers Berücksichtigung.

Unter der Bezeichnung "Leistungswunsch" ist hierbei eine funktional zusammengesetzte Größe zu verstehen, die Aufschluß darüber gibt, in welchem Maß der Fahrer mit einem aktuellen Fahrzustand zufrieden ist. Der Leistungswunsch in Verbindung mit den Parametern Motordrehzahl, Drosselklappenstellung, Gradient (zeitliche Veränderung) der Drosselklappenstellung und der aktuellen Gangstufe führt zu Regeln, die das Expertenwissen eines Fahrers eines Fahrzeuges darstellen, das mit einem manuell zu schaltenden Getriebe ausgestattet ist. Die Fuzzy-Logik-Methode ermöglicht eine verbale Problembeschreibung und damit die Optimierung der Ausgangswerte auf Basis einfach verständlicher Zusammenhänge. Die Folge hiervon ist, daß mögliche Betriebszustände des Fahrzeuges unter Berücksichtigung der äußeren Bedingungen (Fahrzustandserkennung) und des Fahrers (Fahrer-Identifikation) in einer Vielzahl von Variablen zum Ausdruck kommen, die ständig überprüft und aktualisiert werden. Durch die permanente Verarbeitung der Eingangsvariablen kann das automatische Getriebe in einer Weise geschaltet werden, die mit den Entscheidungen eines Experten übereinstimmen. Durch die Anwendung von Fuzzy-Logik-Methoden erhält man eine Steuerung, die in der Weise erfolgt, wie ein Experte ein Handschaltgetriebe betätigt, wobei die Nachteile des Standes der Technik bei Automatik-Getrieben vermieden werden. Diese sind darauf zurückzuführen, daß die Schaltdiagramme scharfe, invariante Entscheidungsschwellen enthalten und lediglich auf der Basis der Drosselklappenöffnung und der Fahrzeuggeschwindigkeit (Abtriebsdrehzahlen) beruhen.

Die Regeln 1 bis 3 des Grundregelsatzes zielen darauf ab, die Motordrehzahlen auf einem mittleren Niveau zu halten (Ziel: Verbrauchsoptimierung). Die Regel 4 bezweckt ein Verschieben der Schaltpunkte zu höheren Drehzahlen hin. Gegenüber der Regelaussage "beibehalten" ist diese Regel schärfer gefaßt. Der Gang soll bei großem Leistungswunsch kleiner sein als er sich aus den Regeln 1 bis 3 ergibt.

Die Regel 5 verhält sich komplementär zur Regel 4. Mit ihr wird bezweckt, bei einem geringen Leistungswunsch möglichst frühzeitig zu höheren Gängen durchzuschalten. Die Regel 6 verstärkt eine Tendenz zur Entscheidung in Richtung Zurückschalten, wenn ein sehr großer Leistungswunsch angezeigt wird (Wirkung einer Kick-down-Regel). In Verbindung mit den Zusatzregeln (vgl. weiter unten, z. B. Zusatzregel 3) sind auf diese Weise Rückschaltungen über mehrere Gänge möglich (2- bis 3fach-Rückschaltungen).

Der Grundregelsatz läßt sich nun erweitern, um die Fahrbarkeit (Driveability) noch weiter zu verbessern. Konkret bedeutet dies, den Leistungswunsch des Fahrers noch stärker zu berücksichtigen. Hierbei erweist sich die Anwendung folgender Zusatzregeln als sehr vorteilhaft:
Zusatzregel 1:
   Benutzte Parameter ... Leistungswunsch (Drosselklappenstellung, Drosselklappen-Gradient), Motordrehzahl, aktuelle Gangstufe.
   Regel-Konklusion: "... Gang beibehalten."
   Regelaussage: "Wenn Leistungswunsch sehr groß und Motordrehzahl mittel bis groß, dann Gang beibehalten."
Zusatzregel 2:
   Benutzte Parameter ... Drosselklappenstellung, Drosselklappen-Gradient, aktuelle Gangstufe
   Regel-Konklusion: "... Gang beibehalten."
   Regelaussage: "Wenn Drosselklappenstellung groß und Drosselklappen-Gradient klein, dann Gang beibehalten."
Zusatzregel 3:
   Benutzte Parameter ... Drosselklappenstellung, Motordrehzahl, aktuelle Gangstufe
   Regel-Konklusion: "... einen Gang zurückschalten."
   Regelaussage: "Wenn Kick-down betätigt und Motordrehzahl unkritisch, dann einen Gang zurückschalten."
Zusatzregel 4:
   Benutzte Parameter ... Drosselklappen-Gradient, Beschleunigung (m/sec²), aktuelle Gangstufe
   Regel-Konklusion: "... Gang beibehalten."
   Regelaussage: "Wenn Drosselklappen-Gradient positiv-mittel und Beschleunigung ausreichend und aktuelle Gangstufe niedrig, dann Gang beibehalten."
Zusatzregel 5:
   Benutzte Parameter ... Bremszeit, Verzögerung, Motordrehzahl, aktuelle Gangstufe und Fahrzeuggeschwindigkeit
   Regel-Konklusion: "... einen Gang zurückschalten"
   Regelaussage: "Wenn Verzögerungswunsch sehr groß (Leistungswunsch negativ sehr groß) und Motordrehzahl mittel bis klein und Fahrzeuggeschwindigkeit nicht hoch und aktuelle Gangstufe > 2, dann einen Gang zurückschalten."
   Mit der Beschränkung dieser Zusatzregel auf Gangstufe > 2 wird bewirkt, daß z. B. beim Einfahren in Kurven bis zum zweiten Gang zurückgeschaltet wird und eine zu starke Verzögerung vermieden wird.
Zusatzregel 6:
   Benutzte Parameter ... Motordrehzahl (hier ist der Parameter Motordrehzahl zwingend vorgeschrieben und kann beispielsweise durch die Getriebeeingangsdrehzahl oder auch Turbinendrehzahl nicht ersetzt werden).
   Regel-Konklusion: "... einen Gang hochschalten."
   Regelaussage: "Wenn Motordrehzahl extrem groß, dann einen Gang hochschalten."

Die letzte Zusatzregel dient dazu, den Motor vor Überdrehzahlen zu schützen. Demzufolge hat diese Regel die höchste Priorität (Priorität: 5,0). Die Zusatzregeln 1 bis 3 haben die Prioritäten 2,5, 3,0, 2,5 und 2,0.

Die Basis-Regeln beschreiben per Definition bestimmte Grundzustände. Um ein harmonisches Übergangsverhalten zwischen diesen Grundzuständen sicherzustellen, wurden die Zusatzregeln 1, 2 und 4 eingeführt. Die Zusatzregel 3 ermöglicht Mehrfachrückschaltungen bei einem extrem hohen Leistungswunsch. In besonderen Situationen unterstützt die Zusatzregel 5 ein beschleunigtes Zurückschalten, so daß eine ausreichende Zugkraftreserve in allen Fahrzuständen erhalten bleibt. Aus der Formulierung der Zusatzregeln läßt sich erkennen, daß situationsbedingte Fahrzustände einbezogen werden. Soweit in den Zusatzregeln die Motordrehzahl als Parameter einfließt, kann ersatzweise die Getriebeeingangsdrehzahl (Turbinendrehzahl) oder eine äquivalente Größe eingesetzt werden (ausgenommen ist die Zusatzregel 6).

### Funktionsblock 12:

Ausgangspunkt bei den Überlegungen einer Schaltpunkt-Adaption sind die den bekannten Schaltstrategien zugrunde liegenden Rahmenkriterien für ökonomisches und leistungsorientiertes Schaltverhalten. Ein Vergleich dieser Standard-Kennlinien führt zu zwei allgemein gültigen Aussagen:
1. Je leistungsorientierter (sportlicher) die Fahrweise und je höher die Gangstufe und je dichter die Leistungsanforderung (Drosselklappenstellung) bei einem mittleren Lastbereich liegt, desto später wird hoch- und desto früher wird zurückgeschaltet;
2. im Kick-down-Bereich ist der Schaltpunkt unabhängig von der Fahrweise.

Die nach diesen Richtlinien durchzuführende Verschiebung der Schaltpunkte kann grundsätzlich auf zwei Wegen erfolgen:
1. Entsprechende Fuzzy-Sets des Grundregelsatzes (Funktionsblock 11, Basis-Modul) werden so verändert, daß das gewünschte Verhalten erreicht wird oder
2. anstelle einer relativ aufwendigen Verschiebung einzelner Fuzzy-Sets kann auch über entsprechende Modulation der zugehörigen Meßgröße der gleiche Effekt erzielt werden.

Der Funktionsblock 12 enthält Fuzzy-Produktionsregeln, die nach obigen Richtlinien arbeiten und die das aus dem Funktionsblock 11 resultierende Verhalten an sich ändernde Bedingungen anpaßt.

### Funktionsblock 13:

Aus den Adaptionsregeln folgt, daß die Schaltpunkt-Adaption von der Fahrweise eines Fahrers abhängt. Um den Funktionsblock 12 zu einem Offset (oder einer anderen Variation des Grundregelsatzes) zu veranlassen, muß ihm ein Identifikationsergebnis (Eingangsvariable des Funktionsblocks 12) mitgeteilt werden, das einen Fahrer nach seiner Fahrweise stufenlos von "ökonomisch" bis "sportlich/leistungsorientiert" einstuft. Dieses Identifikationsergebnis liefert der Funktionsblock 13. Dieser Funktionsblock 13 arbeitet als Fahrer-Identifikations-Modul.

Als Merkmale für die Fahrweise können die folgenden Meßgrößen (Eingangsvariable, Fahrzeug-Parameter) verwendet werden (vorzugsweise geschieht dies wie hier nach dem Passieren eines Filters):

Drosselklappenstellung, Gradient einer Veränderung der Drosselklappenstellung, Fahrzeuggeschwindigkeit (Abtriebsdrehzahl), Beschleunigung, Verzögerung, Stellung des Positionsschalters, Zugkraftüberschuß nach einem möglichen Hochschalten, Querbeschleunigung, Lenkwinkel nach Größe und Geschwindigkeit, Bremsschalter ein/aus.

Der Funktionsblock 13 verarbeitet Identifikationsregeln zur Identifikation eines Fahrers nach seiner Fahrweise, die von einer verbrauchsorientierten bis zu einer leistungsorientierten Fahrweise reicht.

### Funktionsblock 14:

Neben der Berücksichtigung der Fahrweise eines Fahrers ist es sinnvoll, auch einen bestimmten Fahrzustand (Stadt, Autobahn, Berg- und Talfahrt) in die Bewertung einzubeziehen. Der Funktionsblock 14 sorgt für eine dementsprechende Anpassung des Schaltverhaltens. Ein derartiger Ausbau des erfindungsgemäßen adaptiven Steuersystems erscheint insbesondere deswegen sinnvoll, weil:
im Stadtverkehr der Fahrer eine deutlich größere Schaltaktivität als beispielsweise auf der Autobahn erwartet,
es bei Bergfahrt, insbesondere beim Befahren von Serpentinen, für den Fahrer störend ist, wenn Pendelschaltungen auftreten (hier soll der Gang beibehalten werden, der eine ausreichende Zugkraftreserve bietet);
bei Talfahrt die Bremswirkung des Motors genutzt wird, so daß entsprechende Rückschaltungen angebracht sind.

Wenn die vorstehend formulierten Erkenntnisse in ein Fuzzy-Regelwerk umgesetzt werden, führt dies zu einem ergänzenden Adaptions-Regelsatz von Fuzzy-Produktionsregeln. Mit diesem ergänzenden Adaptions-Regelsatz läßt sich der Grundregelsatz (Funktionsblock 11) durch den Funktionsblock 12 in Abhängigkeit eines aktuellen Fahrzustandes modifizieren.

Vorab ist es allerdings notwendig, die unterschiedlichen Fahrzustände zu erkennen. Dies geschieht im Funktionsblock 14 in ähnlicher Weise wie bei der Erkennung einer bestimmten Fahrweise (Funktionsblock 13).

Die Eingangsvariablen des Funktionsblocks 14 sind die Ausgangsvariablen des Funktionsblocks 15, die über einen längeren Zeitraum gefilterte, d. h. gemittelte, Merkmale darstellen. Auch hier sind insbesondere die
Fahrzeuggeschwindigkeit,
Drosselklappenstellung und Gradient der Verstellung der Drosselklappe,
Beschleunigung,
Bremsschalter ein/aus,
Motormoment,
Lenkwinkel
signifikante Fahrzeug-Parameter (Eingangsvariable des Funktionsblocks 15).

Diesen Größen werden typische Wertebereiche zugeordnet. Die Zuordnung erfolgt abhängig von einem bestimmten Fahrzustand. Daher können diese typischen Wertebereiche als Merkmale zur Erkennung eines bestimmten Fahrzustands herangezogen werden.

### Funktionsblock 15:

Der Funktionsblock 15 hat zur Aufgabe, die zur Identifikation des Fahrers genutzten Eingangsvariablen zu filtern. Die Eingangsvariablen werden zu Ausgangsvariablen in Form von gemittelten Merkmalen umgesetzt. Diese reduzierten Merkmale lassen eine Erkennung der Fahrweise eines bestimmten Fahrers zu.

Bei einer bevorzugten Ausbaustufe des erfindungsgemäßen Steuersystems übernimmt der Funktionsblock 15 eine weitere Funktion als Filter: Es werden Eingangsvariable zur Erkennung des Fahrzustandes zu Ausgangsvariablen in Form von gemittelten Merkmalen reduziert, die eine Erkennung des Fahrzustands erlauben. Auf diese Funktion wird weiter unten näher eingegangen.

Es bestehen zwei Möglichkeiten, die zur Identifikation der Fahrweise eines Fahrers genutzten Eingangsvariablen zu filtern, d. h. auf ein "mittleres Verhalten" zu reduzieren:
a) eine konventionelle Filterung und
b) eine Filterung nach Fuzzy-Logik-Methoden.

Bevorzugt wird eine Filterung nach Fuzzy-Produktionsregeln, die auf zwei Bewertungs-Kriterien basiert: Eindeutige Merkmale sollen schnell zu einer Einstufung des Fahrers führen. Weniger eindeutige Merkmale sollen den Fahrer behutsamer, d. h. entsprechend langsamer, einstufen. Mit anderen Worten ausgedrückt heißt dies, daß ein leistungsorientierter Fahrer schnell als solcher erkannt wird, während ein zügiger Fahrer diese Bewertung erst erreicht, wenn er seine Tendenz zu einer leistungsorientierten Fahrweise über einen längen Zeitraum beibehält.

Der Funktionsblock 15 erzeugt (zunächst) an seinem Ausgang eine Bewertungszahl über drei allgemein gültige Regeln:
1. Wenn das Merkmal stark ausgeprägt ist, dann ist das Bewertungs-Inkrement positiv groß;
2. wenn das Merkmal schwach ausgeprägt ist, dann ist das Bewertungs-Inkrement negativ groß und
3. wenn das Merkmal mittelmäßig ausgeprägt ist, dann ist das Bewertungs-Inkrement Null.

Diese Regeln generieren zunächst eine gewichtete Inkrementierung und zeigen damit eine Tendenz auf. Erst über eine nachfolgende Summation dieser Inkremente entsteht eine endgültige Bewertungszahl.

Es hat sich als vorteilhaft erwiesen, die Lernzeiten der Merkmalsfilter in Abhängigkeit des Fahrzustandes zu variieren. Im Stadtbetrieb soll das Fahrverhalten schneller angepaßt werden als im Überlandbetrieb. Im einfachsten Fall erfolgt die Anpassung über die Fahrzeuggeschwindigkeit.
Je größer die Fahrzeuggeschwindigkeit, desto größer ist die Gewichtung der Bewertungs-Inkremente (Richtlinie).
Eine feinere Anpassung an den Fahrzustand kann über Verknüpfung mit dem Fahrzustands-Modul erfolgen, in dem die Zustände "Stadt", "Autobahn" usw. direkt in ein entsprechendes Regelwerk zur Adaption der Lernzeiten eingearbeitet werden.

### Funktionsblock 16:

Die im Grund- und Zusatz-Regelsatz verwendete Eingangsgröße "Leistungswunsch" wird in einem Fuzzy-Modul (Funktionsblock 16) nach Fuzzy-Produktionsregeln generiert. Der Leistungswunsch kann hierbei einem Beschleunigungs- oder Verzögerungswunsch entsprechen. Um den vom Fahrer über das Fahrpedal angemeldeten Leistungswunsch zu repräsentieren, wird über dieses Fuzzy-Modul eine Ausgangsvariable erzeugt, bei der sowohl die absolute Fahrpedalstellung (Drosselklappenstellung) wie auch dessen Verstelldynamik enthalten sind. Demnach wird der Leistungswunsch nicht als zur absoluten Fahrpedalstellung (Drosselklappenstellung) proportionale Größe aufgefaßt. Vielmehr wird auch die vom Fahrer über das Fahrpedal (Drosselklappenstellung) indizierte Dynamik berücksichtigt.

Die Erfindung schlägt eine Möglichkeit vor, die absolute Fahrpedalstellung (Drosselklappenstellung) mit der Verstellaktivität (Dynamik) zu verknüpfen, und zwar in der Weise, daß innerhalb des genannten Fuzzy-Moduls 16 die absoluten Fahrpedalstellungen und deren Gradienten integriert werden. Als Ausgangsvariable stellt dieses Fuzzy-Modul eine wesentlich zutreffendere Repräsentation der Größe "Leistungswunsch" zur Verfügung. Bei dieser Ausgangsvariablen wird die Tatsache berücksichtigt, daß die ausschließliche Auswertung der Fahrpedalstellungsänderung eine nicht lineare Abhängigkeit zum jeweiligen Bereich der Fahrpedalstellung zu einem bestimmten Auswertungszeitpunkt vorweist.

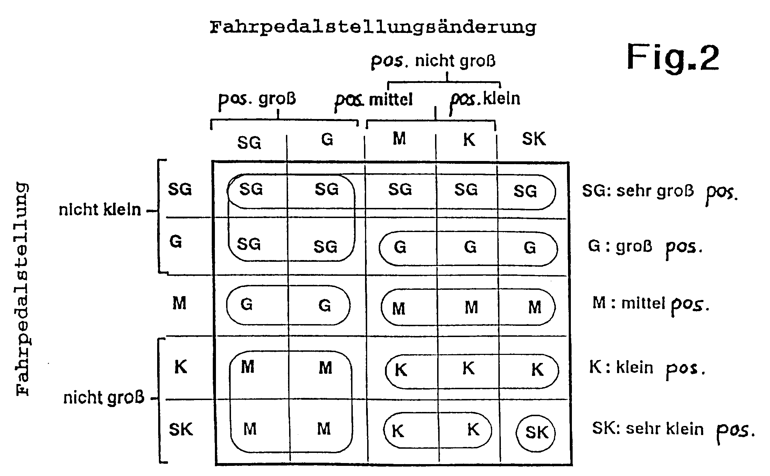

Da der Zusammenhang zwischen der Fahrpedalstellung (Drosselklappenstellung) und deren Gradienten (Verstellung der Drosselklappe als Funktion der Zeit) und dem daraus abgeleiteten Leistungswunsch naturgemäß einer personenbedingten, subjektiven Streuung unterliegt, wurde das zum Fuzzy-Modul "Leistungswunsch" gehörende Regelwerk in Form einer Matrix aus der Abfrage eines repräsentativen Fahrerquerschnitts ermittelt. Diese Abfrage liefert eine neutrale Beurteilungsgrundlage, die unabhängig davon ist, ob ein gerade agierender Fahrer sportlich oder ökonomisch fährt. Die Zusammenhänge sind in Fig. 2 wiedergegeben.

In den Zeilen dieser Matrix sind die möglichen Fahrpedalstellungen (Drosselklappenstellungen) von SG (sehr groß), G (groß), M (mittel) und K (klein) bis SK (sehr klein) aufgeführt. Die Spalten enthalten die Mengen der Fahrpedalstellungsänderung (Drosselklappenstellungsänderung), ebenfalls von SG (sehr groß) bis SK (sehr klein) reichend.

Aus der Matrix ist ersichtlich, daß die Anzahl der für das Fuzzy-Modul "Leistungswunsch" erforderlichen Regeln zunächst eine theoretische Anzahl von 25 ausmacht. Durch Zusammenfassen von Fuzzy-Sets (durch Einrahmung hervorgehoben), kann die theoretisch erforderliche Anzahl von Regeln auf eine Anzahl von 9 minimiert werden. Hiermit wird einem Ziel der vorliegenden Erfindung Rechnung getragen. Hiernach ist die Anzahl der Fuzzy-Produktionsregeln möglichst gering zu halten, um zu einer klar strukturierten Steuerung zu gelangen.

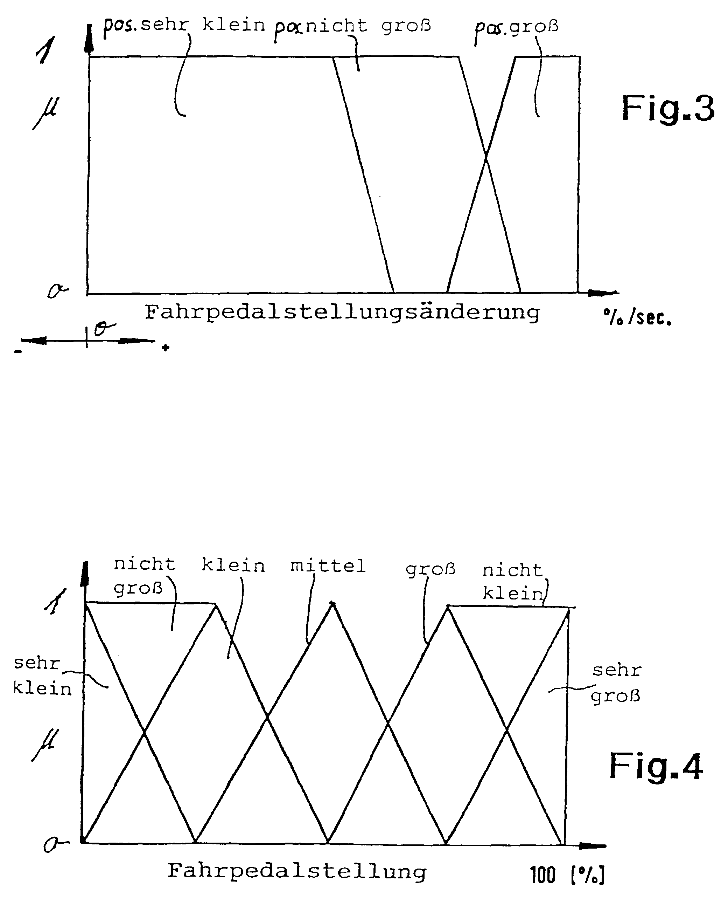

Ein Teil der aus der Reduzierung der theoretischen Anzahl der Regeln resultierenden Fuzzy-(Sub-)Sets sind in Fig. 3 und Fig. 4 dargestellt. Im oberen Diagramm (Fig. 3) sind diese am Beispiel der Fahrpedalstellungsänderung wiedergegeben. Auf der Abszisse sind die Terme der Fahrpedalstellungsänderungen (Prozent/Sekunde) aufgetragen. Auf der Ordinate sind Zugehörigkeitswerte my von 0 bis maximal 1 aufgetragen. Die unscharfe Menge Fahrpedalstellungsänderung "positiv sehr klein" ist durch das links gezeichnete, trapezförmige Fuzzy-Set eingetragen. Die unscharfe Menge Fahrpedalstellungsänderung "positiv groß" ist durch das rechte, ebenfalls trapezförmige Fuzzy-Set definiert. Zwischen den unscharfen Mengen "positiv sehr klein" und "positiv groß" liegt die unscharfe Menge der Fahrpedalstellungsänderung "positiv groß".

Analog hierzu zeigt das Diagramm nach Fig. 4 einzelne Fuzzy-(Sub-)Sets am Beispiel der Terme der Fahrpedalstellung. Die unscharfen Mengen (in Prozent) Fahrpedalstellung "sehr klein", "nicht groß", "klein", "mittel", "groß", "nicht klein" und "sehr groß" sind durch dreieckförmige Fuzzy-Sets definiert.

Die Regeln, die die Ausgangsvariable "Leistungswunsch" beeinflussen, sind vorzugsweise mit einem Gamma-Operator mit dem Kompensationsgrad von 0,3 versehen. Diese Maßnahme wirkt sich bei mittleren und großen Werten der Fahrpedalstellungsänderung im Sinne einer ODER-Verknüpfung aus. Die Ausgangsvariable wird durch eine große Drosselklappenstellung oder einen großen Drosselklappen-Gradienten beeinflußt. Im Schlußfolgerungsteil können die Zugehörigkeitsfunktionen der Ausgangsvariablen über einfache Delta-Funktionen mit dem Wert 1 (Singletons) beschrieben werden.

Für das subjektive Fahrempfinden (Driveability) ist es vorteilhaft, die Änderungsrichtung des Leistungwunsches unterschiedlich zu wichten. Der Fahrer erwartet in der Regel bei positiven Änderungen (schnelles bzw. langsames Gasgeben), daß das Fahrzeug spontan und proportional zu dieser Leistungswunsch-Änderung reagiert. Die Größe "Leistungswunsch" soll somit unverzögert an das weiterverarbeitende Steuersystem übermittelt werden.

Umgekehrt gilt bei negativen Änderungen des Leistungswunsches (schnelles bzw. langsames Gaswegnehmen), daß die Änderung nur verzögert an das Steuersystem weitergegeben wird.

Durch die Verzögerung wird zum einen eine evtl. vom Fahrer über das Fahrpedal eingespeiste Unruhe gedämpft (keine ständige Übersetzungsänderung) und zum anderen wirkt diese Verzögerung als Zustandsspeicher für das Basismodul (Funktionsblock 11). Ohne diesen Zustandsspeicher würden kurzzeitig auftretende Systemzustände (Veränderungen des Drosselklappen-Gradienten) nicht in der geforderten Weise weiterverarbeitet werden können.

Am Beispiel eines Überholvorganges läßt sich die Wirkung dieser bewußten Verzögerung erläutern: Eine durch großen, positiven Drosselklappen-Gradienten eingeleitete Verstellung in Richtung großer Übersetzung wurde direkt nach Abklingen der Gradientenvorgabe wieder rückgängig gemacht. Ohne Verzögerung würde dieser Zustandswechsel so schnell erfolgen, daß dem Leistungswunsch des Fahrers (große Fahrzeugbeschleunigung) nicht entsprochen werden könnte. Eine verzögerte Weitergabe der negativen Änderung (Abklingen der Gradientenvorgabe) ermöglicht es, den Überholvorgang zügig zu beenden.

### Funktionsblock 17:

Die angesprochene Verzögerung wird über eine funktionale Filterstruktur (Funktionsblock 17) realisiert. Die Verzögerungszeitkonstante kann situationsbedingt angepaßt werden. Diese Anpassung erfolgt vorzugsweise derart, daß bei großen Filtereingangssignalwerten kleine Zeitkonstanten (träge Reaktion) angesetzt werden, während kleine Filtereingangssignalwerte große Zeitkonstanten (schnelle Reaktion) bewirken. Damit wird dem Umstand Rechnung getragen, daß der Fahrer im unteren Lastbereich (kleiner Leistungswunsch) empfindlicher auf das Fahrzeug einwirken möchte als im oberen Lastbereich.

Zusätzlich zu dieser ständigen Anpassung kann über einen entsprechenden Parameter der Filterstruktur ein Grundverhalten (schneller, träger) aufgeprägt werden.

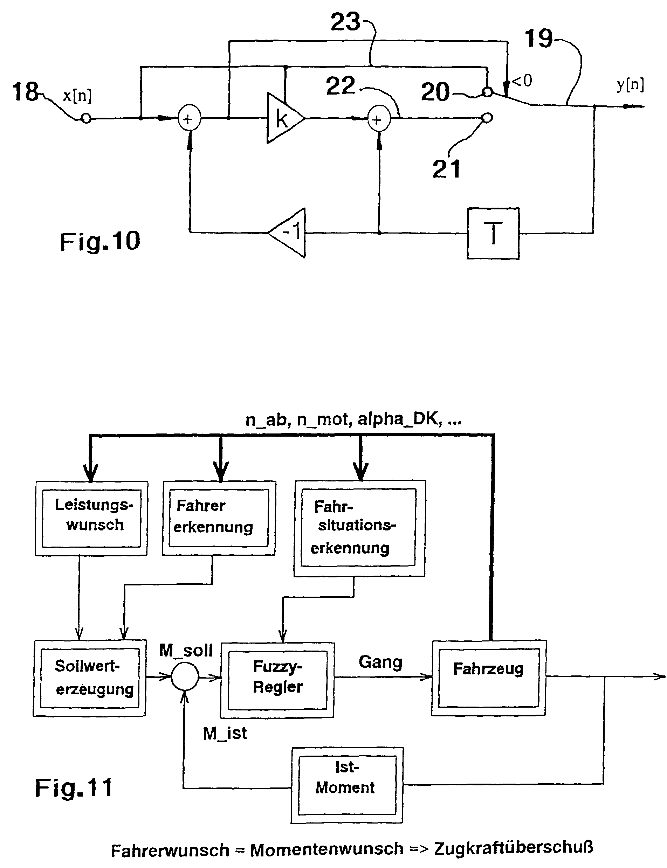

Ein Beispiel für eine mögliche Ausgestaltung einer funktionalen Filterstruktur ist in Fig. 10 schematisch wiedergegeben. Durch den Funktionsblock 16 wird eine den Leistungswunsch repräsentierende Ausgangsvariable erzeugt, bei der sowohl die absolute Fahrpedalstellung (Drosselklappenstellung) wie auch dessen Verstelldynamik enthalten sind. Diese Ausgangsvariable liegt als Eingangsvariable am Funktionsblock 17 an dessen Eingang 18 an. Die erzeugte Ausgangsvariable y der Filterstruktur hängt von der Größe der Eingangsvariablen x ab. Die Ausgangsvariable "Leistungswunsch" wird an das Basismodul (Funktionsblock 11) weitergeleitet. Der Ausgang 19 kann über zwei Schaltstellungen (Position 20 bzw. 21) mit einer in der Zeichnung untenliegenden Signalleitung 22 bzw. einer oberen Signalleitung 23 verbunden sein. Bei der gezeichneten Verbindung wird die Eingangsvariable x über die Leitung 23 unverzögert an den Ausgang 19 als Ausgangsvariable y weitergeleitet. Es gelten folgende Filtergleichungen:
I. y(n) = x(n) für x(n) > oder = y(n -1) und
II. y(n) = y(n-1) + k(x(n) - Y(n-1)) für x(n) < y(n-1)
mit k = k(x (n)) = Xₘₐₓ ⁻¹ (Schwelle⁻¹ -b) * x(n) +b,
wobei:
- k =: eine Filterzeitkonstante ist, über die eine Gewichtung der Änderung x(n) -y(n -1) vorgenommen wird. Die Filterzeitkonstante k ist eine Funktion von x (Leistungswunsch) über der Zeit. Bei kleinen x-Werten ist die Filterzeitkonstante k groß und fällt in Richtung auf große x-Werte linear ab. Der in der Filtergleichung II aufgeführte Wert Xₘₐₓ entspricht einem Maximalwert von x. Dieser Wert ist progammabhängig und kann sich daher - je nach den Gegebenheiten - ändern. Bei dem Schwellwert handelt es sich um einen Offset, mit dem verhindert wird, daß die Filterzeitkonstante k zu Null wird. Durch diese Schwelle wird auch das Anfangsverhalten der Übergangsfunktion bei einer sprungförmigen Veränderung des Leistungswunsches festgelegt;
- b =: mit diesem Wert wird das Verhalten bei kriechender Änderung von x(n) festgelegt. Ist b groß, erfolgt auf eine Änderung x(n) eine sehr direkte Nachfolge.

Ist die Filterzeitkonstante k groß, wird eine Änderung von x(n) sehr schnell am Ausgang wirksam. Ist die Filterzeitkonstante k hingegen klein, macht sich eine Änderung von x(n) nur verzögert am Ausgang bemerkbar. Tendenziell bedeutet dies bei großen Änderungen die Verwendung kleiner Filterzeitkonstanten und damit eine geringere Gewichtung der Änderung, während kleine und definierte Änderungen demgegenüber mit großen Filterzeitkonstanten, d. h. mit einem schnellen Durchgriff, berücksichtigt werden. Eine kleine, definierte Änderung kann beispielsweise das langsame (definierte) Zurücknehmen des Fahrpedals bedeuten.

Der Funktionsblock 16, mit dem die im Grund- und Zusatz-Regelsatz verwendete Eingangsgröße "Leistungswunsch" generiert wird, kann bei einer bevorzugten Ausgestaltung eines Steuersystems zum Schalten eines automatischen Getriebes weiter ausgebaut werden. Bei dieser bevorzugten Ausgestaltung wird neben dem Leistungswunsch, der einem Beschleunigungswunsch entspricht, der Leistungswunsch, der einem "Verzögerungswunsch" entspricht, zusätzlich berücksichtigt.

Bei diesem "Verzögerungswunsch" handelt es sich ebenfalls um eine subjektive Größe, die den Wunsch des Fahrers nach einer bestimmten Verzögerung des Fahrzeuges zum Ausdruck bringt. Hierbei wird unterschieden zwischen einem Verzögerungswunsch, der über das Fahrpedal (Drosselklappe) und einem Verzögerungswunsch, der über die Bremse angezeigt wird. Die beiden Arten des Verzögerungswunsches unterscheiden sich prinzipiell darin, daß sie mit unterschiedlicher Gewichtung in die Gesamtaussage einbezogen werden. Wenn der Bremsschalter betätigt wird und damit ein Bremssignal vorliegt, ist die Aussage: "Fahrer möchte verzögern" relativ sicher. Demzufolge kann entsprechend zielgerichtet (entschlossen) eine verzögernd wirkende Maßnahme ergriffen werden. Zurückhaltender ist dann vorzugehen, wenn der Fahrer lediglich das Fahrpedal zurücknimmt, ohne jedoch effektiv zu bremsen.

Um die Intensität der Betätigung der Bremse einzubeziehen, wird das zunächst in digitaler Form vorliegende Bremssignal in eine kontinuierliche Größe "Bremszeit" umgewandelt. Hierzu wird beim Signalwechsel von Null auf Eins (Bremspedal getreten) eine Zeitstufe gestartet. Diese bleibt aktiv, bis der Fahrer das Bremspedal wieder freigibt. Somit steht dem verarbeitenden Regelwerk eine zusätzliche Information zur Verfügung. Diese Information beinhaltet die Bremszeit als maßgebliche Grundlage zur Kennzeichnung der Verzögerungsabsicht des Fahrers.

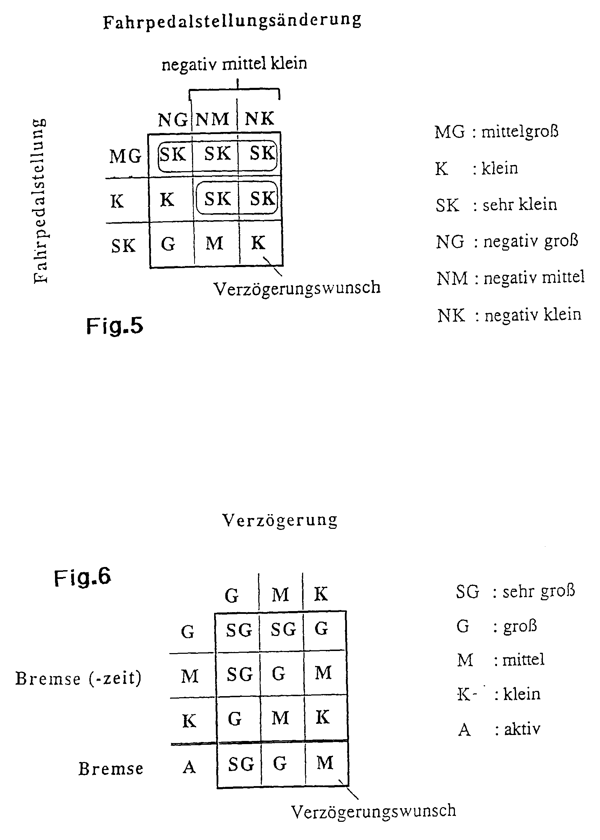

Die in den Fig. 5 und 6 sowie in Fig. 2 in Matrix-Darstellungen aufgeführten Fuzzy-Produktionsregeln erzeugen Ausgangsvariable, die sowohl den positiven als auch negativen Leistungswunsch repräsentieren. Diese Ausgangsvariablen werden in den nachgeschalteten Modulen, z. B. dem Funktionsblock 17, weiter verarbeitet. Sämtliche Fuzzy-Produktionsregeln sind im Funktionsblock 16 implementiert.

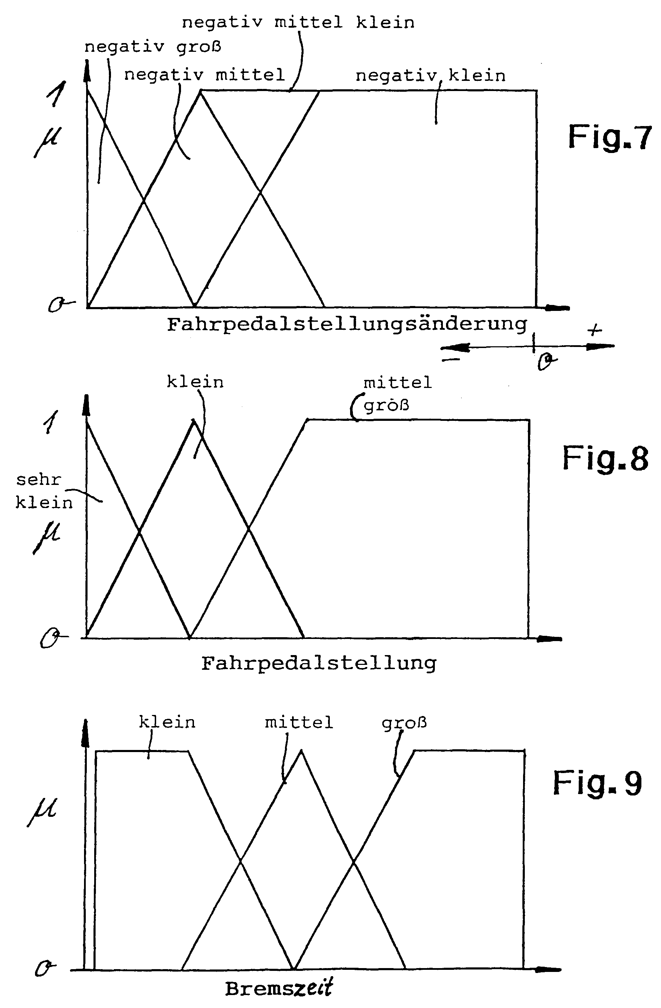

Die Fig. 7 bis 9 zeigen einen Teil der Fuzzy-(Sub-)Sets am Beispiel der Fahrpedalstellungsänderung (Fig. 7), der Fahrpedalstellung (Fig. 8) und der Bremszeit (Fig. 9). Zur Beschreibung der Fahrpedalstellungsänderung dienen die Terme: negativ groß, negativ mittel, negativ mittel klein und negativ klein. Die Fahrpedalstellung wird durch die unscharfen Mengen sehr klein, klein und mittel groß definiert. Für die Bremszeit gelten die Terme: klein, mittel und groß.

Die Größe "Verzögerungswunsch" läßt sich vorteilhaft bei bestimmten Fahrzuständen nutzen. Hierzu zählen:
1. Ausnutzen der Motorbremswirkung bei Bergabfahrt;
2. Verhindern von Schaltungen bei schneller Gasrücknahme (Fahrpedalrücknahme) und
3. Rückschalten beim Betätigen der Bremse.

Bei Bergabfahrt (Fall 1) soll die Motorbremswirkung ausgenutzt werden. Zunächst wird bei Fahrpedalstellung = Null (d. h. Leistungswunsch = Null) die aktuelle Gangstufe gehalten. Betätigt der Fahrer aus diesem Zustand heraus die Bremse, wird, je nach Intensität des Verzögerungswunsches, eine Rückschaltung um einen oder mehrere Gänge eingeleitet. Diese Rückschaltung wird abhängig von der aktuellen Motordrehzahl (Turbinendrehzahl) vorgenommen. Ein Überbremsen des Fahrzeugs wird vermieden (Zusatzregel 5).

Bei schneller Rücknahme des Fahrpedals, wie dies beim Einfahren in eine Kurve (Fall 2) erfolgt, soll zunächst eine Hochschaltung verhindert werden. Bei daraufhin abfallender Abtriebsdrehzahl wird eine mögliche Rückschaltung so lange unterbunden, bis der Fahrer das Fahrpedal oder die Bremse betätigt, d. h. bereit ist, das Fahrverhalten zu ändern. Es ist zweckmäßig, eine Änderung des Fahrverhaltens über einen Fuzzy-Zustandsspeicher zu erfassen bzw. auszugeben.

Bei starker Verzögerung (Fall 3) ist es sinnvoll, schnell in kleinere Gangstufen zu schalten. Beabsichtigt der Fahrer nach einem Bremsen unmittelbar zu beschleunigen (Leistungswunsch groß), wird durch eine kleinere Gangstufe unmittelbar die für die Beschleunigung erforderliche Zugkraft bereitgestellt. Der Fahrer kann also unverzögert beschleunigen, ohne vorher zurückzuschalten. Die Rückschaltung wird in Abhängigkeit der aktuellen Motordrehzahl (Turbinendrehzahl) vorgenommen, so daß auch hier ein Überbremsen des Fahrzeuges vermieden wird.

Für die Funktionen entsprechend Ziffer 1 und 2 wird die gleiche Zusatzregel 5 angewandt. Auch hierin kommt ein Vorteil der Fuzzy-Logik-Methode zum Ausdruck.

Die spontanen, situationsbedingten Fahrzustände (z. B. Kurvenfahrt, kurze Gefälle- bzw. Steigungsstrecken usw.) erfordern eine spontane Reaktion. Der Fahrzustand muß direkt auf die Gang- bzw. Übersetzungswahl durchgreifen, ohne daß vorher Filteralgorithmen durchlaufen werden müssen.

Es ist daher sinnvoll, die beschriebenen, situationsbedingten Fahrzustände direkt im Basis-Modul (Funktionsblock 11) durch die vorgeschlagenen Zusatzregeln zu berücksichtigen. Um der Forderung nach einem direkten Durchgriff Rechnung zu tragen, weisen die Funktionsblöcke 13 und 14 eine direkte Verbindung zum Basis-Modul auf, was durch die entsprechenden Verbindungslinien in Fig. 1 hervorgehoben ist.

### Mögliche Abwandlungen:

Die bisher vorgestellte Betriebsvariante benutzt die Sollgang-(Übersetzungs-)vorgabe als Stellgröße, um einem vom Fahrer kommenden Leistungswunsch nachzukommen. Der Leistungswunsch ist hierbei eine funktional zusammengestellte ("fiktive") Größe, die allgemein angibt, in welchem Maß der Fahrer mit dem aktuellen Fahrzustand zufrieden ist.

Diese Größe kann nicht aus den aktuellen Fahrzeugzuständen gemessen oder berechnet werden und kann somit nicht als Rückführung eines Istwertes zum Aufbau eines Regelkreises herangezogen werden. Regelungstechnisch handelt es sich bei der vorgestellten Wirkungskette somit um eine Steuerung der Größe Leistungswunsch (erste Betriebsart), welche die Leistungsanforderungen des Fahrers primär in einen zu schaltenden Gang umsetzt. Dabei bleibt immer ein gewisser Unsicherheitsfaktor bestehen, da der Fahrer nicht nur eine Schaltung auslösen möchte, sondern er möchte das Fahrzeugverhalten in bestimmter Art und Weise in Richtung Beschleunigung oder Verzögerung verändern. Dieser Zusammenhang wird bei dieser ersten Betriebsart nicht berücksichtigt.

Es kann daher vorteilhaft sein, aus der fiktiven Größe "Leistungswunsch" und der Größe "Fahrweise" (Fahrsituation) eine physikalische Größe in bezug auf den Beschleunigungswunsch des Fahrers abzuleiten. In einer weiteren (zweiten Betriebsart) ist diese physikalische Größe der Zugkraftüberschuß (bzw. das Überschußmoment), also die physikalische Ursache für eine Fahrzeugbeschleunigung gemäß F = m x a.

Die Verknüpfung von Leistungswunsch und Fahrweise geschieht wegen des nichtlinearen Zusammenhanges vorteilhaft über Fuzzy-Produktionsregeln. Dazu wird die Größe "Zugkraftüberschuß" in 5 Klassen unterteilt (negativ groß, negativ mittel, null, positiv mittel, positiv groß). Die Grenzwerte dieser Klassen werden durch die Fahrzeug-Parameter vorgegeben, wobei im allgemeinen der negative Wertebereich (Verzögerung) größer ausfällt als der positive Wertebereich (Beschleunigung).

Folgende Tendenzen (Richtlinien) sind in dem zugehörigen Fuzzy-Regelwerk enthalten:
1. Je größer der Leistungswunsch und je sportlicher die Fahrweise, desto größer ist der gewünschte Zugkraftüberschuß.
2. Je kleiner der Leistungswunsch und je sportlicher die Fahrweise, desto kleiner ist der gewünschte Zugkraftüberschuß.

Der so ermittelte Vorgabewert für den gewünschten Zugkraftüberschuß wird als Sollwert in eine Regelkreisstruktur eingespeist, die als Rückführwert den tatsächlich vorliegenden Zugkraftüberschuß (berechnet aus F = m x a) enthält, d. h. es liegt eine Regelung mit Soll-Ist-Vergleich vor (Fig. 11). Der eingesetzte Regler arbeitet nach Fuzzy-Produktionsregeln und gibt fahrsituationsabhängig einen Gang bzw. eine einzustellende Übersetzungsstufe als Stellgröße an das Getriebe/Fahrzeugsystem aus.

Die Abhängigkeit von der Fahrsituation ist hier auch als Plausibilitätsprüfung zu sehen, welcher Gang der aktuellen Abweichung von Soll- und Ist-Zugkraftüberschuß am besten gerecht wird.

Bei Bergauffahrt und einem großen Beschleunigungswunsch des Fahrers (Zugkraftüberschuß positiv groß) ist es sinnvoll, in den kleineren Gangstufen zu bleiben. Bei entsprechender Anforderung in der Ebene können dagegen auch höhere Gangstufen den gewünschten Zugkraftüberschuß liefern, was insgesamt zu einer ökonomischen Fahrweise führt. Das Problem der Pendelschaltungen bei Bergfahrt wird mit dieser Vorgehensweise ebenfalls sicher vermieden.

Ein weiterer Vorteil dieser zweiten Betriebsart ist die einfache Eingliederungsmöglichkeit in übergeordnete Regel- und Steuerkonzepte des Antriebsstranges. Die Regelkreisstruktur verbleibt dazu im Bereich der Getriebesteuerung, während der Sollwert im übergeordneten Steuersystem erzeugt wird (Getriebesteuerung = intelligentes Stellglied).

### Bezugszeichen

- 1: Fahrzeug
- 2: Motor
- 3: automatisches Getriebe
- 4: Antriebswellenstrang
- 5: Ausgleichsgetriebe
- 6: angetriebene räder
- 7: lenkbare Räder
- 8: Eingangsvariable
- 9: Mittel zum Erfassen der Eingangsvariablen
- 10: Steuersystem
- 11: Funktionsblock
- 12: Funktionsblock
- 13: Funktionsblock
- 14: Funktionsblock
- 15: Funktionsblock
- 16: Funktionsblock
- 17: Funktionsblock
- 18: Eingang
- 19: Ausgang
- 20: Position
- 21: Position
- 22: Signalleitung
- 23: Signalleitung

## Patentansprüche

1. Steuersystem (10) zum Verändern der Übersetzung eines automatischen Getriebes (3) mit Mitteln (9) zum Erfassen von Eingangsvariablen, die mindestens die Drosselklappenstellung bzw. die absolute Fahrpedalstellung und die Verstelldynamik bzw. die Veränderung der Fahrpedalstellung nach Größe und Richtung über der Zeit beinhalten und die von einem Fahrer-Fahrzeugsystem abgeleitet sind, Mitteln zum Erzeugen von Zugehörigkeitsfunktionen (Fuzzy-Sets) für die Eingangsvariablen und Mitteln zum Verändern von Getriebeübersetzungen, wobei die Mittel (9) zum Erfassen der Eingangsvariablen und die Mittel zum Erzeugen der Zugehörigkeitsfunktionen und die Mittel zum Verändern der Getriebeübersetzungen in der Weise zusammenwirken, daß nach Fuzzy-Produktionsregeln Ausgangsvariable ermittelt werden, mit denen eine Getriebeübersetzung bestimmt wird, dadurch **gekennzeichnet,** daß zumindest die Eingangsvariablen: Drosselklappenstellung bzw. absolute Fahrpedalstellung und Verstelldynamik bzw. Veränderung der Fahrpedalstellung nach Größe und Richtung über der Zeit miteinander nach Fuzzy-Produktionsregeln über ein Regelwerk, dem ein von der aktuellen Fahrweise unabhängiger, repräsentativer Fahrerquerschnitt zugrunde liegt, verknüpft werden, und daß die aus dieser Verknüpfung resultierende Größe, die einen Leistungswunsch, z. B. Beschleunigungs- oder Verzögerungswunsch, des Fahrers repräsentiert, eine Eingangsvariable für einen Grund- und Zusatz-Regelsatz von Fuzzy-Produktionsregeln bildet.

2. Steuersystem nach Anspruch 1, dadurch **gekennzeichnet,** daß die Fuzzy-Produktionsregeln einen Grund-Regelsatz zur Schaltpunktbestimmung enthalten, bei dem der Leistungswunsch des Fahrers Berücksichtigung findet.

3. Steuersystem nach den Ansprüchen 1 und 2, dadurch **gekennzeichnet,** daß die Fuzzy-Produktionsregeln einen Zusatz-Regelsatz zur Berücksichtigung situationsbedingter Fahrzustände unter Berücksichtigung des Leistungswunsches des Fahrers beinhalten.

4. Steuersystem nach den Ansprüchen 1 bis 3, dadurch **gekennzeichnet,** daß der Leistungswunsch eine funktional zusammengesetzte Größe ist, die Aufschluß darüber gibt, in welchem Maß der Fahrer mit einem aktuellen Fahrzustand zufrieden ist.

5. Steuersystem nach den Ansprüchen 1 bis 4, dadurch **gekennzeichnet,** daß der Leistungswunsch, die Motordrehzahl, die Getriebeeingangsdrehzahl, die Fahrzeugbeschleunigung bzw. -verzögerung, die Fahrzeuggeschwindigkeit, die Drosselklappenstellung, der Drosselklappen-Gradient und die aktuelle Gangstufe nach Fuzzy-Produktionsregeln verarbeitet werden.

6. Steuersystem nach den Ansprüchen 1 bis 5, dadurch **gekennzeichnet,** daß die im Grund- und Zusatz-Regelsatz verwendete Größe Leistungswunsch in einem Fuzzy-Modul (16) als Ausgangsvariable generiert wird.

7. Steuersystem nach den Ansprüchen 1 bis 6, dadurch **gekennzeichnet,** daß der Zusammenhang zwischen der Fahrpedalstellung bzw. Drosselklappenstellung und deren Gradienten bzw. Verstellung der Drosselklappe als Funktion der Zeit aus der Abfrage eines repräsentativen Fahrerquerschnitts ermittelt wird.

8. Steuersystem nach Anspruch 1, dadurch **gekennzeichnet,** daß neben dem Leistungswunsch, der einem Beschleunigungswunsch entspricht, der Leistungswunsch, der einem Verzögerungswunsch entspricht, berücksichtigt wird.

9. Steuersystem nach Anspruch 8, dadurch **gekennzeichnet,** daß der Verzögerungswunsch über das Fahrpedal bzw. Drosselklappe und/oder über die Bremse erfaßt wird.

10. Steuersystem nach Anspruch 9, dadurch **gekennzeichnet,** daß der Verzögerungswunsch, der über das Fahrpedal bzw. Drosselklappe und/oder über die Bremse indiziert wird, quantitativ unterschiedlich gewichtet wird.

11. Steuersystem nach Anspruch 1, dadurch **gekennzeichnet,** daß die Änderungsrichtungs des Leistungswunsches in der Weise unterschiedlich gewichtet wird, daß bei positiven Änderungen bzw. Gasgeben eine unverzögerte Übermittlung an das weiterverarbeitende Steuersystem erfolgt, während bei negativen Änderungen des Leistungswunsches bzw. Gaswegnehmen eine verzögerte Übermittlung erfolgt.

12. Steuersystem nach Anspruch 11, dadurch **gekennzeichnet,** daß dem Fuzzy-Modul zur Erkennung eines Beschleunigungs- bzw. Verzögerungswunsches ein Filter (17) nachgeschaltet ist, dessen Zeitkonstante situationsbedingt variabel ist.

13. Steuersystem nach Anspruch 12, dadurch **gekennzeichnet,** daß das Filter (17) bei großen Filtereingangssignalwerten kleine Zeitkonstante aufweist, während bei kleinen Filtereingangssignalwerten große Zeitkonstante wirksam sind.

14. Steuersystem nach den Ansprüchen 12 und 13, dadurch **gekennzeichnet,** daß dem Filter (17) ein Grundverhalten aufgeprägt werden kann.

15. Steuersystem (10) zum Verändern der Übersetzung eines automatischen Getriebes (3) mit Mitteln (9) zum Erfassen von Eingangsvariablen, die mindestens die Drosselklappenstellung bzw. die absolute Fahrpedalstellung und die Verstelldynamik bzw. die Veränderung der Fahrpedalstellung nach Größe und Richtung über der Zeit beinhalten und die von einem Fahrer-Fahrzeugsystem abgeleitet sind Mitteln zum Erzeugen von Zugehörigkeitsfunktionen bzw. Fuzzy-Sets für die Eingangsvariablen und Mitteln zum Verändern von Getriebeübersetzungen, wobei die Mit- Vertel (9) zum Erfassen der Eingangsvariablen und die Mittel zum Erzeugen der Zugehörigkeitsfunktionen und die Mittel zum Verändern der Getriebeübersetzungen in der Weise zusammenwirken, daß nach Fuzzy-Produktionsregeln Ausgangsvariable ermittelt werden, mit denen eine Getriebeübersetzung bestimmt wird, dadurch **gekennzeichnet,** daß die Drosselklappenstellung bzw. absolute Fahrpedalstellung und Verstelldynamik bzw. Veränderung der Fahrpedalstellung nach Größe und Richtung über der Zeit und der Fahrweise nach Fuzzy-Produktionsregeln eine physikalische Größe Zugkraftüberschuß bzw. Überschußmoment erzeugt und als Sollwert in einen Regelkreis eingespeist wird, der als Rückführwert den aktuell vorliegenden Zugkraftüberschuß (F = m x a) enthält.

16. Steuersystem nach Anspruch 15, dadurch **gekennzeichnet,** daß der eingesetzte Regler nach Fuzzy-Produktionsregeln arbeitet und fahrsituationsabhängig einen Gang bzw. eine einzustellende Übersetzungsstufe als Stellgröße an das Getriebe/Fahrzeugsystem ausgibt.

17. Steuersystem nach den Ansprüchen 15 bis 16, dadurch **gekennzeichnet,** daß der Zugkraftüberschuß bei großem Leistungswunsch und sportlicher Fahrweise groß ist, während er bei kleinem Leistungswunsch und ökonomischer Fahrweise klein ist.

18. Steuersystem nach Anspruch 1, dadurch **gekennzeichnet,** daß zur Identifikation des Fahrers eine adaptive Filterstruktur vorgesehen ist (15), deren Lernzeiten in Abhängigkeit vom Fahrzustand variabel sind.

## Claims

1. Control system (10) for changing the transmission ratio of an automatic transmission (3) with means (9) for determining input variables, which at least include the throttle valve position or the absolute accelerator position and the adjustment dynamics or the change in the accelerator position according to quantity and direction over time and are derived from a driver-vehicle system, means for generating associated functions (fuzzy sets) for the input variables and means for changing transmission ratios, the means (9) for determining the input variables and the means for generating the associated functions and the means for changing the transmission ratios cooperating in such a manner that output variables are determined according to fuzzy logic generating rules and are used to determine a transmission ratio, characterised in that at least the input variables: throttle valve position or absolute accelerator position and adjustment dynamics or change in the accelerator position according to quantity and direction over time are linked according to fuzzy logic generating rules by means of a control installation, which is based on a representative driver cross section independent of the existing driving manner, and the quantity resulting from this linking, which represents a performance desired by the driver, e.g. a desired acceleration or deceleration, forms an input variable for a basic and additional set of fuzzy logic generating rules.

2. Control system according to claim 1, characterised in that the fuzzy logic generating rules comprise a basic set of rules for determining the switching point, in which the performance desired by the driver is taken into account.

3. Control system according to claims 1 and 2, characterised in that the fuzzy logic generating rules include an additional set of rules for taking into account situation-related driving modes, whilst taking into account the performance desired by the driver.

4. Control system according to claims 1 to 3, characterised in that the performance desired by the driver is a functionally composed quantity, which provides information as to the degree of driver satisfaction with the existing driving mode.

5. Control system according to claims 1 to 4, characterised in that the desired performance, the engine speed, the transmission input speed, the vehicle acceleration or deceleration, the vehicle velocity, the throttle valve position, the throttle valve gradient and the existing gear stage are processed according to fuzzy logic generating rules.

6. Control system according to claims 1 to 5, characterised in that the quantity 'desired performance' used in the basic and additional sets of rules is generated in a fuzzy module (function block 16) as an output variable.

7. Control system according to claims 1 to 6, characterised in that the correlation between the accelerator position or throttle valve position and the gradient thereof or the adjustment of the throttle valve is determined as a function of time from the interrogation of a representative driver cross section.

8. Control system according to claim 1, characterised in that, in addition to the desired performance which corresponds to a desired acceleration, the desired performance which corresponds to a desired deceleration is also taken into account.

9. Control system according to claim 8, characterised in that the desired deceleration is determined by means of the accelerator or throttle valve and/or by means of the brake.

10. Control system according to claim 9, characterised in that the desired deceleration, which is induced by means of the accelerator or throttle valve and/or by means of the brake, is quantitatively differently weighted.

11. Control system according to claim 1, characterised in that the direction of change of the desired performance is differently weighted in such a manner that, in the case of positive changes or accelerations, an immediate transfer to the control system is effected, which continues to operate, whilst in the case of negative changes in the desired performance or decelerations a delayed transfer is effected.

12. Control system according to claim 11, characterised in that a filter (17), whose time constant is variable according to the situation, is connected downstream of the fuzzy module in order to detect a desired acceleration or deceleration.

13. Control system according to claim 12, characterised in that the filter (17) comprises small time constants in the case of large filter input signal values, whilst large time constants are effective in the case of small filter input signal values.

14. Control system according to claims 12 and 13, characterised in that a basic behaviour can be imprinted on the filter (17).

15. Control system (10) for changing the transmission ratio of an automatic transmission (3) with means (9) for determining input variables, which at least include the throttle valve position or the absolute accelerator position and the adjustment dynamics or the change in the accelerator position according to quantity and direction over time and are derived from a driver-vehicle system, means for generating associated functions or fuzzy sets for the input variables and means for changing transmission ratios, the means (9) for determining the input variables and the means for generating the associated functions and the means for changing the transmission ratios cooperating in such a manner that output variables are determined according to fuzzy logic generating rules and are used to determine a transmission ratio, characterised in that the throttle valve position or absolute accelerator position and adjustment dynamics or change in the accelerator position according to quantity and direction over time and the driving manner a physical quantity 'load excess' or 'excess moment' is generated according to fuzzy logic generating rules and is fed as a nominal value into a control circuit, which contains the currently existing load excess (F = m x a) as a feedback value.

16. Control system according to claim 15, characterised in that the controller which is used operates according to fuzzy logic generating rules and as a function of the driving mode transmits a gear or a transmission stage which is to be engaged as a control variable to the transmission/vehicle system.

17. Control system according to claims 15 to 16, characterised in that the load excess is large in the case of high desired performance and sporty driving manner, whilst it is small in the case of low desired performance and economic driving manner.

18. Control system according to claim 1, characterised in that an adaptive filter structure (function block 15), whose learning times are variable as a function of the driving mode, is provided in order to identify the driver.

## Revendications

1. Système de commande (10) pour permettre le changement de rapport d'une transmission automatique (3) avec des moyens (9) pour capter des variables d'entrée comprenant au moins la position de la soupape d'étranglement, respectivement la position absolue de la pédale de l'accélérateur et la dynamique de réglage, respectivement la variation de la position de la pédale de l'accélérateur selon la grandeur et la direction dans le temps et qui sont transmises par un système conducteur-véhicule, des moyens pour générer des fonctions d'appartenance (variables floues) pour les variables d'entrée, et des moyens pour modifier les rapports de transmission, dans lequel les moyens (9) pour capter les variables d'entrée et les moyens pour générer les fonctions d'appartenance et les moyens pour modifier les rapports de transmission concourent de telle manière que, selon les règles de production floues, des variables de sortie sont définies avec lesquelles est déterminé un rapport de transmission, **caractérisé** en ce qu'au moins les variables d'entrée : position de la soupape d'étranglement, respectivement position absolue de la pédale de l'accélérateur et dynamique de réglage, respectivement variation de la pédale de l'accélérateur selon la grandeur et la direction dans le temps sont reliés entre eux selon les règles de production floues par l'intermédiaire d'un dispositif de réglage basé sur une moyenne de conduite représentative, indépendante de la conduite réelle et que la grandeur résultant de cette liaison, qui représente une demande de performance de la part du conducteur, par exemple une demande d'accélération ou de ralentissement, forme une variable d'entrée pour un jeu de règles de base ou de complément des règles de production floues.

2. Système de commande selon la revendication 1, **caractérisé** en ce que les règles de production floues comportent un jeu de règles de base pour la détermination du point d'enclenchement tenant compte de la demande de performance du conducteur.

3. Système de commande selon les revendications 1 et 2, **caractérisé** en ce que les règles de production floues comportent un jeu de règles complémentaires pour tenir compte d'états de conduite conditionnés par la situation donnée en prenant en considération la demande de performance du conducteur

4. Système de commande selon les revendications 1 à 3, **caractérisé** en ce que la demande de performance est une grandeur composée de façon fonctionnelle indiquant dans quelle mesure le conducteur est satisfait de l'état réel de la conduite.

5. Système de commande selon les revendications 1 à 4, **caractérisé** en ce que la demande de performance, le régime du moteur, le régime d'entrée de la transmission, l'accélération du véhicule, respectivement, sa décélération, la vitesse du véhicule, la position de la soupape d'étranglement, le gradient de la soupape d'étranglement et le rapport engagé sont traités d'après les règles de production floues.

6. Système de commande selon les revendications 1 à 5, **caractérisé** en ce que la grandeur demande de performance utilisée dans le jeu des règles de base et de complément est générée comme variable de sortie dans un module floues (bloc de fonctions 16).

7. Système de commande selon les revendications 1 à 6, **caractérisé** en ce que la relation entre la position de la pédale de l'accélérateur, respectivement la position de la soupape d'étranglement et ses gradients, respectivement le déplacement de la soupape d'étranglement comme fonction du temps, sont déterminés à partir de l'interrogation d'une moyenne représentative de conducteur.

8. Système de commande selon la revendication 1, **caractérisé** en ce qu'il est tenu compte, en plus de la demande de performance correspondant à une demande d'accélération, également de la demande de performance correspondant à une demande de ralentissement.

9. Système de commande selon la revendication 8, **caractérisé** en ce que la demande de ralentissement est détectée par l'intermédiaire de la pédale de l'accélérateur, respectivement la soupape d'étranglement et/ou le frein.

10. Système de commande selon la revendication 9, **caractérisé** en ce que la demande de ralentissement indiquée au moyen de la pédale de l'accélérateur, respectivement de la soupape d'étranglement et/ou du frein, est pondérée selon une différence quantitative.

11. Système de commande selon la revendication 1, **caractérisé** en ce que le changement du sens de la demande de performance est pondérée quantitativement différemment de telle manière que pour le changement positif, respectivement l'accélération, la transmission au système de commande se fait instantanément, tandis que pour le changement négatif de la demande de performance, respectivement la décélération, la transmission est retardée.

12. Système de commande selon la revendication 11, **caractérisé** en ce que, pour permettre de reconnaître une demande d'accélération, respectivement de décélération, un filtre (17) est monté en série avec le module flou, ce filtre ayant une constante de temps variable en fonction de la situation.

13. Système de commande selon la revendication 12, **caractérisé** en ce que le filtre (17), en cas de grandes valeurs des signaux d'entrée, présente des constantes de temps faibles, tandis qu'en cas de petites grandeurs des signaux d'entrée ce sont de grandes constantes de temps qui agissent.

14. Système de commande selon les revendications 12 et 13, **caractérisé** en ce qu'il est possible d'imposer au filtre (17) une allure de base.

15. Système de commande (10) pour permettre le changement de rapport d'une transmission automatique (3) avec des moyens (9) pour capter des variables d'entrée comprenant au moins la position de la soupape d'étranglement, respectivement la position absolue de la pédale de l'accélérateur et la dynamique de réglage, respectivement la variation de la position de la pédale de l'accélérateur selon la grandeur et la direction dans le temps et qui sont transmises par un système conducteur-véhicule, des moyens pour générer des fonctions d'appartenance (variables floues) pour les variables d'entrée, et des moyens pour modifier les rapports de transmission, dans lequel les moyens (9) pour capter les variables d'entrée et les moyens pour générer les fonctions d'appartenance et les moyens pour modifier les rapports de transmission concourent de telle manière que, selon les règles de production floues, des variables de sortie sont définies avec lesquelles est déterminé un rapport de transmission, **caractérisé** en ce que la position de la soupape d'étranglement, respectivement la position absolue de la pédale de l'accélérateur selon la grandeur et la direction dans le temps et le mode de conduite selon les règles de production floue génèrent une grandeur physique, excédant de force de traction, respectivement moment d'excès, qui est introduite comme valeur de consigne dans un circuit de réglage qui comporte comme valeur de réaction l'excédant de force de traction effectivement présent (F = m x a).

16. Système de commande selon la revendication 15, **caractérisé** en ce que le régulateur utilisé travaille d'après les règles de production floues et délivre, en fonction de la situation de conduite, une vitesse, respectivement un rapport de transmission, à régler comme grandeur de réglage à la boite de vitesse au système du véhicule.

17. Système de commande selon les revendications 15 à 16, **caractérisé** en ce que l'excédant de force de traction est important en cas de forte demande de performance et de conduite sportive, tandis qu'en cas de faible demande de performance et de conduite économique, il est petit.

18. Système de commande selon la revendication 1, **caractérisé** en ce que, pour l'identification du conducteur, une structure de filtre adaptative (15), dont les temps d'adaptation sont variables en fonction de l'état de conduite, est prévue.
